# EUROPEAN PATENT APPLICATION

(11) **EP 4 309 855 A1**
(43) Date of publication of application: **24.01.2024**
(21) Application number: 22275101.8
(22) Date of filing: 21.07.2022
(51) Int. Cl.: B25J 9/16

(54) **A METHOD OF USING A ROBOTIC ARM TO POSITION A PART**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method of using a robotic arm to position a part of an object at a first target position with respect to an object build frame comprising obtaining, by the robotic arm, the part; determining a move operation to apply to the part that moves the part to a second target position spatially separated from the object build frame; moving, by the robotic arm, the part according to the move operation; obtaining an actual position of the part; determining a correction operation to apply to the part that moves the part from the actual position to the second target position; moving, by the robotic arm, the part according to the correction operation; determining a relative move operation to apply to the part that moves the part from the second target position to the first target position; and moving, by the robotic arm, the part according to the relative move operation.

## Description

### FIELD

The present invention relates to a method of using a robotic arm to position a part of an object at a first target position with respect to an object build frame.

### BACKGROUND

Robotic arms and or other robotic systems of manufacture can be used when manufacturing/building objects such as vehicles, for example, aircraft. In particular, a robotic arm or other robotic system of manufacture can be used to position/locate a part of an object in a target position wherein the target position is defined with respect to other parts of the object that are already attached to an object build frame. However, a robotic arm often has errors that mean the actual position can differ from the target position by several millimetres, for example 2mm to 8mm or even up to 10mm or more. Although it is possible to correct for small errors in position by adjusting the position of the part after it is initially positioned/located, when the errors are of the order of several millimetres this can become more difficult. This is because when errors in position are in the order of millimetres applying a correction to the position of the part can result in the part colliding with other previously positioned parts of the object. This is particularly a problem when the object is a complex object such as an aircraft where a large number of parts need to be positioned close to each other and to a high degree of accuracy.

Given the above, it is desirable to find an improved way to use a robotic arm or other robotic system of manufacture to position parts of an object with respect to an object build frame.

### SUMMARY

According to an aspect of the present invention, there is provided a method of using a robotic arm to position a part of an object at a first target position with respect to an object build frame. The method comprises obtaining, by the robotic arm, the part. The method also comprises determining a move operation to apply to the part wherein the move operation moves the part to a second target position wherein the second target position is spatially separated from the object build frame. The method further comprises moving, by the robotic arm, the part according to the move operation. The method also comprises obtaining an actual position of the part and determining a correction operation to apply to the part wherein the correction operation moves the part from the actual position to the second target position. The method further comprises moving, by the robotic arm, the part according to the correction operation. The method comprises determining a relative move operation to apply to the part wherein the relative move operation moves the part from the second target position to the first target position; and moving, by the robotic arm, the part according to the relative move operation.

In some examples, the first target position, the second target position and the actual position of the part are specified relative to the object build frame. In some examples the relative move operation is specified relative to the second target position.

In some examples, determining a relative move operation to apply to the part and moving the part according to the relative move operation comprises determining a relative move operation via a third target position and moving the part via the third target position. This comprises determining the third target position and determining a first relative move operation to apply to the part wherein the first relative move operation moves the part from the second target position to the third target position. This further comprises moving, by the robotic arm, the part according to the first relative move operation. This also comprises determining a second actual position of the part and determining a second correction operation to apply to the part wherein the second correction operation moves the part from the second actual position to the third target position. This further comprises moving, by the robotic arm, the part according to the second correction operation. This also comprises determining a second relative move operation to apply to the part wherein the second relative move operation moves the part from the third target position to the first target position and moving, by the robotic arm, the part according to the second relative move operation. In this example, the first relative move operation may be specified relative to the second target position and the second relative move operation may be specified relative to the third target position. The third target position may be determined relative to the object build frame.

In some examples, the second target position being spatially separated from the object build frame comprises the second target position being separated from the object build frame such that when the correction operation is applied to the part, the part does not come into contact with the object build frame.

In some examples, the method further comprises obtaining a third actual position of the part wherein the third actual position of the part is specified relative to the object build frame; determining a third correction operation to apply to the part wherein the third correction operation moves the part from the third actual position to the first target position; and moving, by the robotic arm, the part according to the third correction operation.

In some examples, the method further comprises obtaining a fourth actual position of the part wherein the fourth actual position of the part is specified relative to the object build frame and comparing the fourth actual position of the part to the first target position. In response to determining the fourth actual position is within a threshold of the first target position, the method comprises affixing the part to the object build frame. In response to determining the fourth actual position is not within the threshold of the first target position, the method comprises: determining a fourth correction operation to apply to the part wherein the fourth correction operation moves the part from the fourth actual position to the first target position; and moving, by the robotic arm, the part according to the fourth correction operation.

In some examples, the robotic arm obtains the part from a starting location; and determining a move operation to apply to the part comprises determining a move operation that moves the part from the starting location to the second target position.

In some examples, the actual position of the part is obtained from a metrology system. For example, obtaining the actual position of the part from the metrology system comprises using an imaging device to determine an actual position of the part with respect to the object build frame. The imaging device can comprise a camera or a laser watching tracking system.

In some examples, robotic arm navigates using a coordinate system wherein the coordinate system is provided by a floor grid which is divided into cells that provide unit cells for the coordinate system.

In some examples, the part comprises a part of a vehicle; the object comprises a vehicle; and the object build frame comprises a vehicle build frame. In other examples the part comprises a part of an aircraft; the object comprises an aircraft; and the object build frame comprises an aircraft build frame.

In some examples the method comprises receiving from a computer aided manufacturing tool the second target position specified with respect to the object build frame. In these examples determining a relative move operation to apply to the part may comprise receiving from a computer aided manufacturing tool the relative move operation specified with respect to the second target position.

In the above example receiving from a computer aided manufacturing tool the second target position may comprise receiving from the computer aided manufacturing tool a nominal position of the second target position. The method may then further comprise receiving from a computer aided manufacturing tool a nominal position of the object build frame, obtaining an actual position of the object build frame, determining a difference between the nominal position of the object build frame and the actual position of the object build frame, and determining the second target position from the nominal position of the second target position using the difference between the nominal position of the object build frame and the actual position of the object build frame.

In the above examples, the relative move operation may be a relative move operation via a third target position. Hence, determining the relative move operation to apply to the part and moving the part according to the relative move operation may comprise receiving from the computer aided manufacturing tool a first relative move operation wherein the first relative move operation moves the part from the second target position to the third target position, moving, by the robotic arm, the part according to the first relative move operation, determining a second actual position of the part, determining a second correction operation to apply to the part wherein the second correction operation moves the part from the second actual position to the third target position, moving, by the robotic arm, the part according to the second correction operation, receiving from the computer aided manufacturing tool a second relative move operation to apply to the part wherein the second relative move operation moves the part from the third target position to the first target position, and moving, by the robotic arm, the part according to the second relative move operation. The first relative move operation may be specified relative to the second target position and the second relative move operation may be specified relative to the third target position.

According to another aspect of the present invention, there is provided a computing device for controlling a robotic arm to position a part of an object at a first target position with respect to an object build frame, the computing device comprising a processor and a memory. The memory stores instructions that when executed by the processor cause the processor to: cause the robotic arm to obtain the part; determine a move operation to apply to the part wherein the move operation moves the part to a second target position wherein the second target position is spatially separated from the object build frame; cause the robotic arm to move the part according to the move operation; obtain an actual position of the part; determine a correction operation to apply to the part wherein the correction operation moves the part from the actual position to the second target position; cause the robotic arm to move the part according to the correction operation; determine a relative move operation to apply to the part wherein the relative move operation moves the part from the second target position to the first target position; and cause the robotic arm to move the part according to the relative move operation.

According to a further aspect of the present invention, there is provided a guided robotic system for positioning a part of an object at a first target position with respect to an object build frame, the guided robotic system. The guided robotic system comprises a computing device comprising a processor and a memory. The memory stores instructions that when executed by the processor cause the processor to: cause the robotic arm to obtain the part; determine a move operation to apply to the part wherein the move operation moves the part to a second target position wherein the second target position is spatially separated from the object build frame; cause the robotic arm to move the part according to the move operation; obtain an actual position of the part; determine a correction operation to apply to the part wherein the correction operation moves the part from the actual position to the second target position; cause the robotic arm to move the part according to the correction operation; determine a relative move operation to apply to the part wherein the relative move operation moves the part from the second target position to the first target position; and cause the robotic arm to move the part according to the relative move operation. The guided robotic system further comprises a robotic arm configured to, under control of the computing device: obtain the part; move the part according to the move operation; move the part according to the correction operation; and move the part according to the relative move operation.

In some examples the guided robotic system further comprises a metrology system configured to determine an actual position of the part using an imaging system; and provide the actual position of the part to the computing device. The imaging system may comprise a camera or a laser tracking system.

In some examples the guided robotic system may further comprise a communications interface configured to receive the instructions from a computer aided manufacturing tool running on a remote computing device.

According to another aspect of the invention, there is provided a non-transient computer-readable storage medium comprising instructions that when executed by a processor cause the processor to perform a method for controlling a robotic arm to position a part of an object at a first target position with respect to an object build frame. The method comprising causing the robotic arm to obtain the part; determining a move operation to apply to the part wherein the move operation moves the part to a second target position wherein the second target position is spatially separated from the object build frame; causing the robotic arm to move the part according to the move operation; obtaining an actual position of the part; determining a correction operation to apply to the part wherein the correction operation moves the part from the actual position to the second target position; causing the robotic arm to move the part according to the correction operation; determining a relative move operation to apply to the part wherein the relative move operation moves the part from the second target position to the first target position; and causing the robotic arm to move the part according to the relative move operation.

### BRIEF DESCRIPTION OF THE FIGURES

Embodiments of the invention will now be described by way of example only with reference to the figures, in which:
Figure 1 shows a robotic arm being used to position a part at a first target position with respect to an object build frame;
Figure 2 is a flowchart showing a method for positioning a part at a first target position with respect to an object build frame wherein the part is positioned via a second target position;
Figure 3 is a flowchart showing a final correction process for positioning a part at a first target position with respect to an object build frame;
Figure 4 is a flow diagram showing a method for positioning a part at a first target position with respect to an object build frame wherein the part is positioned via several intermediary target positions;
Figure 5 shows a guided robotic system which can be used to implement a method of positioning a part at a first target position with respect to an object build frame; and
Figure 6 shows a computer device or computing-based device that can be used to control a robotic arm to position a part at a first target position with respect to an object build frame.

### DETAILED DESCRIPTION

This application relates to using a robotic arm to position a part of an object in a first target position with respect to an object build frame of the object. The object build frame comprises parts of the object that have already been positioned and can also be referred to as an object assembly. When a robotic arm is used to position a part there can be multiple errors due to errors in the manufacture of the part, errors in the positioning of the object build frame and errors in how the robotic arm is mapping space onto the object build frame. These errors result in the part being positioned incorrectly. Often these errors are in the order of millimetres or even tens of millimetres. As such, these errors cannot always be corrected in-place since this would result in the part colliding or otherwise interacting with the object build frame and/or other parts of the object. This could damage the part or other parts of the object. In order to reduce the size of the in-place correction, in the present application, the part is first positioned at a second target position which is spatially separated from the object build frame. Any correction is then applied in order to correct for any errors in the object build frame and how the robotic arm maps to the robotic build frame. A relative move is then used to position the part in the first target position. Since the relative move is calculated with respect to the first target position and not an absolute position defined with respect to the object build frame, the errors in how the robotic arm maps the absolute position remain corrected. While there can be other errors due to the accuracy with which the robotic arm can be moved, these are often lower allowing them to either be ignored or be corrected in-place.

In some examples, the object can comprise a vehicle, the part a part of a vehicle and the object build frame a vehicle build frame or vehicle assembly. In other examples, the object can comprise an aircraft, the part a part of an aircraft and the object build frame an aircraft build frame or aircraft assembly. However, the skilled person would understand that other objects can also be considered.

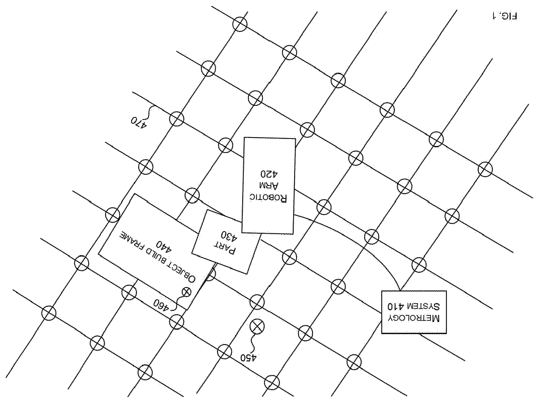

Figure 1 shows a robotic arm 420 that can be used to position a part 430 at a first target position 460 with respect to an object build frame 440. As discussed in more detail below, the part 430 is moved to the first target position 460 via a second target position 450 which is spatially separated from the object build frame 440. Figure 1 also shows a metrology system 410 which can be used to determine a position of the part 430 with respect to the object build frame 440. Figure 1 further shows a floor grid 470 wherein, in some examples the robotic arm 420 can use the floor grid 470 to navigate and determine its own position with respect to a coordinate system defined by the floor grid 470. The robotic arm 420 can use the position of the object build frame 440 on the floor grid 470/coordinate system to determine a position with respect to the object build frame 440 and to position parts with respect to the object build frame 440.

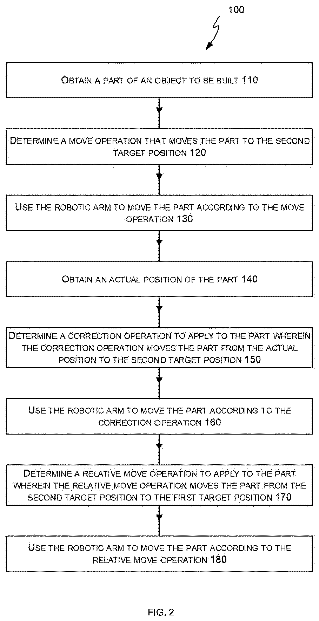

Figure 2 is a flow chart showing a method 100 for positioning a part 430 using a robotic arm 420 or other robotic manufacture device in accordance with the present application. In particular, Figure 2 shows a method for moving a part 430 of an object to a first target position 460 wherein the first target position 460 is defined with respect to an object build frame 440. The first target position 460 being defined with respect to the object build frame 440 means the first target position 460 is specified in the reference frame of the object build frame. Hence, a portion or part of the object build frame 440 can be considered to define an origin or zero point for the reference frame. In one example, the object being built may comprise an aircraft, the object build frame 440 may comprise an aircraft build frame, and the origin or zero point may comprise the position of a nose of the aircraft/aircraft build frame. The first target position 460 is specified with respect to the object build frame 440 and represents a position that the part 430 should be moved to in order to correctly position the part 430 with respect to the object build frame 440 as defined in a reference frame of the object build frame 440. Figure 2 thus represents a method 100 of using a robotic arm 420 (or other robotic manufacturing device) to position the part 430 of the object with respect to the object build frame 440.

At step 110, the robotic arm 420 (or other robotic manufacture device) obtains the part 430 to be positioned. The part 430 may be obtained from a starting location that comprises a pickup location. The starting location can be any suitable location and may comprise a location in which the part 430 is stored or may comprise a location where parts are moved to enable them to be positioned using robotic arm 420.

At step 120, the method comprises determining a move operation to apply to the part 430. This step may be performed by a computing device. The move operation is an operation that when implemented by the robotic arm 420 moves the part 430 to the second target position 450. The second target position 450 is different from the first target position 460. The move operation can be a translation and/or a rotation that moves the part to the second target position 450. The move operation defines the second target position 450 with respect to the object build frame 440. In other words, the second target position 450 is defined relative to the object build frame 440. Thus, the second target position 450 is specified in the reference frame of the object build frame 440. The second target position 450 is a position in free space and/or clear space in that when the part 430 is in the second target position 450, the part 430 will avoid all collisions with the object, object build frame 440 and/or any other objects in the vicinity of the object build frame 440. In this regard, the second target position 450 can be considered to be spatially separated from the object build frame 440. In some examples, the move operation can be an operation that moves the part 430 from the starting location to the second target position 450. However, this operation can be determined by considering both the starting location and the second target position 450 in a reference frame of the object build frame 440. Hence, this move operation can be considered to be an absolute move.

At step 130, the method comprises using the robotic arm 420 to move the part 430 in accordance with the move operation. In other words, the method comprises moving, by the robotic arm 420, the part 430 according to the move operation. Due to the limitations of the robotic arm 420 and/or other robotic manufacturing system, using the robotic arm 420 to move the part 430 in accordance with the move operation will not result in the part 430 being positioned exactly in the second target position 450. Instead, the part 430 will be positioned in the second target position 450 to within some error threshold. This error can be caused by errors in the manufacture/tolerances of the part 430, errors in the robotic arm 420 that mean the robotic arm 420 does not position the part 430 correctly with respect to the object build frame 440 and errors in positioning of the object build frame 440, for example, with respect to the floor grid 470. For some robotic arms or robotic systems of manufacture this error may be of the order of millimetres, for example around 10mm or between 2mm and 8mm. Therefore, using the robotic arm 420 to move the part 430 in accordance with the move operation results in the part 430 being positioned in the second target position 450 to within a degree of accuracy. When building a complex object such as an aircraft, this degree of accuracy may be too low to enable an accurate build. Thus, this degree of accuracy may prevent robotic arms or other robotic systems of manufacture being used for building the object. It is therefore desirable to correct this error.

In step 140, an actual position of the part 430 is obtained or determined. The actual position is specified relative to the object build frame 440. In other words, the actual position is determined in the reference frame of the object build frame 440 and is a position with respect to the object build frame 440. The actual position of the part 430 is a position at which the robotic arm 420 has located/positioned the part 430 when attempting to locate/position the part 430 in the second target position 450. This actual position can be determined using a metrology or other measurement system 410 and obtained from the metrology or other measurement system 410. When a metrology or other measurement system 410 is used, the metrology or other measurement system 410 is used to determine an accurate actual position of the part 430. The metrology system 410 may be external to and separate from the robotic arm 420. However, in other examples the metrology system 410 may form part of the robotic arm 420. In one example the metrology system 410 is a camera. In another example the metrology system 410 is a laser tracking system.

In step 150 the method comprises determining a correction operation to apply to the part 430. This step may be performed by the computing device. The correction operation comprises a move operation which moves the part 430 from the actual position to the second target position 450. This move operation can comprise translating and/or rotating the part 430 to move the part 430 from the actual position to the second target position 450. The correction operation is a move operation relative to the actual position since the correction operation specifies how the part 430 should be moved from the actual position to arrive at the second target position 450. In other words, this correction can specify how the part 430 needs to be moved from the actual position to be positioned in the second target position 450. In some examples the order of magnitude of the correction can be anticipated. For example, if the error is order of millimetres, then the order of magnitude of the correction can also be of the order of millimetres. Having the second target position 450 be in free space or spatially separated from the object build frame 440 can comprise the second target position 450 being separated from the build frame such that any correction applied to the part 430 does not cause the part 430 to collide or otherwise come into contact with or interfere with the object and/or the object build frame 440.

In step 160, the robotic arm 420 is used to apply the correction operation to the part 430. In other words, the method comprises moving, by the robotic arm 420, the part 430 according to the correction operation. Hence, the robotic arm 420 is used to correct the position of the part 430 so that the part 430 moves from the actual position to a closer approximation of the second target position 450. While there still may be an error in the position of the part 430, this error is lower than the previous error. This is because the correction operation may correct any errors in the manufacture/tolerances of the part 430, errors in positioning of the object build frame 440 and errors in alignment between the robotic arm 420 and the object build frame 440. Thus, the remaining error may be reduced to errors in the system used to obtain the actual position of the part 430, which, when the system is a metrology system 410 may be metrology errors and, potentially, any errors that occur when performing the correction operation. For some examples, this may reduce the error to the order of 0.25mm so reduce the error by one or two orders of magnitude.

At step 170, the method comprises determining a relative movement to apply to the part 430 wherein the relative movement moves the part 430 from the second target position 450 to the first target position 460. The relative move operation can comprise a translation and/or rotation that moves the part 430 from the second target position 450 to the first target position 460. This step can be performed using the computing device. The relative movement is a relative move operation. The relative movement is determined with respect to the second target position 450. In other words, the relative movement is determined in the reference frame of the second target position 450 which can be considered a local reference frame. The relative movement therefore specifies how the part 430 should be moved from the second target position 450 to position the part 430 in the first target position 460. As the movement is specified in the reference frame of the second target position 450, errors in how the robotic arm 420 determines a position in the reference frame of the object build frame 440 can remain corrected as the part 430 moves to the first target position 460. Similarly, errors/tolerances in the manufacture of the part 430 can remain corrected for as the part 430 moves. However, in some examples, errors may occur due to the accuracy with which the robotic arm 420 can move the part 430 although these errors can be considerably smaller than errors that occur when moves are made in the reference frame of the object build frame 440 e.g. with respect to absolute position.

At step 180, the method comprises using the robotic arm 420 to move the part 430 according to the relative move operation. In other words, the robotic arm 420 moves the part 430 in accordance with the relative move operation. The aim of this move operation is to position the part 430 in the first target position 460. As mentioned above, since the relative move operation is a relative operation in a reference frame of the second target position 450, any errors in how the robotic arm 420 determines location in the reference frame of the object build frame 440 can remain corrected for even after the relative move operation. This reduces any errors in positioning/locating the part 430 in the first target position 460. This means the part 430 can be accurately positioned with respect to the object build frame 440. Although there may still be some errors in the final position of the part 430 due to limitations on how accurately the robotic arm 420 can implement a relative move.

The skilled person would understand that the method 100 described above can be performed using a robotic arm 420 controlled by a computing device wherein the computing device can be used to control the robotic arm 420. Hence, the computing device can perform the above-mentioned determining and calculating steps and can also be used to control the robotic arm 420 to cause the robotic arm 420 to perform the above-mentioned move steps. The robotic arm 420 and computing device may be combined into a single robotic system. Alternatively, the computing device and robotic arm 420 may be separate devices that are configured to connect or otherwise communicate to enable implementation of the method 100. In some examples the computing device may receive details of the object to be built wherein the details comprise a nominal position for the object build frame 440 and the first second position 450. The computing device may then adjust these nominal positions based on a position of the object build frame 440 as determined by the metrology system 410 or as programmed into the computing device by a user. This enables the computing device to be programmed offline and then the program implemented without the user having to adjust the program during the building of the object.

The above method can improve positioning a part 430 with respect to an object build frame 440. In particular, it is noted that if the robotic arm 420 is used to move the part to the first target position 460 to within a degree of accuracy obtainable when using absolute position, then corrections of the order of magnitude of millimetres or tens of millimetres may be required while the part 430 is close to or approximate in the first target position 460. However, corrections of the order of magnitude of millimetres or tens of millimetres may not be possible to apply when the part 430 is close to or approximate in the first target position 460. This is because applying the correction while the part 430 is close to or approximately in the first target position 460 may result in the part 430 colliding or otherwise interacting with the object and/or object build frame 440, for example by colliding or otherwise interaction with other parts already positioned with respect to the object build frame 440. A collision or other form of interaction may damage or move the part 430 or other parts of the object build frame 440.

Taking this into account, the above method applies any corrections in free space wherein the part 430 is spatially separated from the object build frame 440. The part 430 is then moved from the free space position at which the correction is applied to the first target position 460 using a move relative to the free space position at which the correction is applied. This ensures that errors in how the robotic arm 420 positions objects in the reference frame of the object build frame 440 including errors in the manufacture of the part 430, errors in the positioning of the object build frame 440 and errors in how the robotic arm 420 maps the object build frame 440 can be corrected for and remain corrected for during the relative movement. As discussed in more detail below, there may still be some errors in the positioning of the part 430 compared to the first target position 460. In particular, there can be errors due the accuracy of the measurement/metrology system 410 and errors due to the robotic arm 420 not applying the relative move operation accurately. However, in some examples, these errors are reduced from being of the order of millimetres that occur when positioning using absolute position to the order of fractions of millimetres e.g. 0.25mm, 0.5mm or 0.75mm. Thus, the above method represents an order of magnitude reduction in the error in positioning a part 430. These smaller errors may be within the tolerance of the object. In other examples, discussed in more detail below, these errors may be small enough to be corrected in-place while avoiding collisions between the part 430 and the object build frame 440 and/or the object.

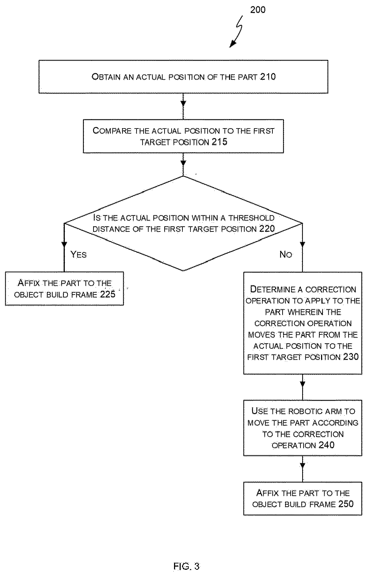

As discussed above, despite applying a correction when the part 430 is in a second target position 450 and/or an intermediary target position, there may still be an error in the position of the part 430 after the robotic arm 420 has positioned the part 430 to the first target position 460. This error may be of the order of magnitude of a fraction of millimetres e.g. 0.25mm, 0.5mm or 0.75mm. As such, this error may be small enough to correct in-place without the part 430 colliding or otherwise interacting with the object build frame 440. Therefore, in some examples, the above method may further comprise performing an in-place correction of this error before the part 430 is considered to be correctly positioned in the first target position. A method 200 for performing such a correction is shown in Figure 3.

As shown in step 210 of Figure 3, when an in-place correction of error is performed, the method of positioning the part 430 further comprises obtaining an actual position of the part 430 relative to the object build frame 440. This step can be performed by the computing device. As before this actual position can be determined using a metrology or other measurement system 410 such as a camera or a laser tracking system and then obtained from the metrology or other measurement system 410. This actual position can be considered to be a second/third or further actual position to distinguish it from previously obtained actual positions.

In step 230, the method further comprises determining a correction operation to apply to the part 430. This correction operation may be determined by the computing device. The correction operation comprises a move operation that moves the part 430 from the actual position to the first target position 460. Where necessary, the correction operation can be referred to as a second/third correction operation to distinguish it from previously considered correction operations. The correction operation can be a move operation that comprises translating and/or rotating the part 430 to position it in the first target position 460. The correction operation is a move relative to the actual position since the correction operation specifies how the part 430 should be moved from the actual position to ensure it is positioned in the first target position 460.

In step 250, the method then further comprises using the robotic arm 420 to move the part 430 according to the correction operation. In other words the method comprises moving the part 430 according to the correction operation using the robotic arm 420. This correction operation moves the part 430 to position the part 430 closer to the first target position 460. Given the method 200 in Figure 3 is performed after the correction in free space described with respect to Figure 2 above, the correction applied here is relatively small. For example, the correction operation may only requirement a movement of fractions of millimetres e.g. 0.25mm, 0.5mm or 0.75mm. This means the correction operation in step 240 can be applied with the part 430 in-place since the relatively small movement means the part 430 can be moved without colliding or otherwise interacting with other parts of the object build frame 440.

Once the correction operation has been applied, then in step 250, the part 430 may be optionally affixed, attached or otherwise connected to the object build frame 440 or other previously positioned parts of the object. This may be done using a robotic system, another part of the robotic arm 420 or by a human operator. Attaching/affixing the part 430 to the object build frame 440 enables the object to be built while using a robotic arm 420 for positioning.

As shown in Figure 3, while in some examples the correction operation mentioned above is always applied, in other examples an error in the positioning of the part 430 may be determined and if the error is small, no correction may be applied. To this end, in some examples, rather than just determining 230 and implementing 240 a correction operation, after obtaining 210 an actual position of the part 430, the method may further comprise comparing the actual position to the first target position 460 in step 215. This step may be performed by the computing device. To this end, the method 200 may comprise determining a difference between the actual position and the first target position 460. This difference may then be compared with a threshold difference wherein the threshold difference represents a degree of accuracy to which the part 430 should be positioned.

At step 220, the method may comprise using the comparison to determine how the difference between the actual position and the target position compare to a threshold. This step may be performed by the computing device. If the difference between the actual position and first target position 460 is determined to be below or not above a threshold difference, then the actual position can be considered within a threshold distance of the first target position 460. In contrast, if the difference between the actual position and the first target position 460 is determined to be above or not below a threshold difference, then the actual position can be considered to be not within a threshold difference distance.

At step 225, if the actual position is considered to be within a threshold distance of the first target position 460, then the method can comprise affixing, attaching or otherwise connecting the part 430 to the object build frame 440 without performing the corrections defined in steps 230 and 240. As mentioned above, this may involve connecting or otherwise attaching the part 430 to the object build frame 440 or other parts 430 which have been positioned with respect to the object build frame 440. This may be done using a robotic system, another part of the robotic arm 420 or by a human operator.

In contrast, if the actual position is not considered to be within a threshold distance of the first target position 460, then the method can comprise the steps of determining a correction operation 230 and using the robotic arm 420 to move the part 430 according to the correction operation 240 discussed above. In some examples, only one cycle of comparing the actual position to the first target position 460, is performed and after any corrections have been applied in step 240, the part 430 is attached to the object build frame 440 in step 250. In other examples, multiple cycles of comparing the actual position to the first target position 460 can be performed and the part 430 may only be attached to the object build frame 440 when the actual position of the part 430 is within a threshold distance of the first target position 460.

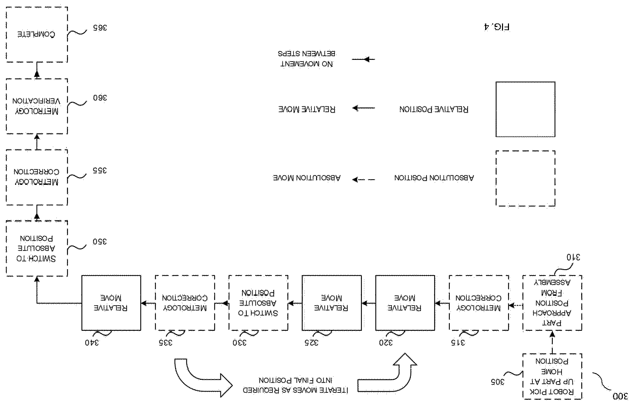

As shown in Figure 4, in some examples, method 100 of Figure 2 can comprise an iterative move, measure, correct procedure where multiple moves and corrections are used before the part 430 is positioned in the first target position 460. In particular, in some examples the part 430 is moved to the first target position 460 via several intermediary target positions. This is because, dependent upon the complexity of the object and the number of parts already connected to the object build frame 440, multiple relative move operations may be necessary in order to move the part 430 to the first target position 460. For example, if the object being built and/or the object build frame 440 are complex, then a chain of relative move operations may be required to move part 430 into position without colliding with any parts already forming the object build frame 440. This may involve a chain of relative move operations that form a zig-zag path via multiple intermediary target positions. In some examples, as described in more detail below, the relative move operations may be a set of relative more operations provided by a user and/or a design/manufacturing tool and specified with respect to each other.

The move to the first intermediary target position can be performed in the frame of reference of the object build frame 440. In other words, the move to the first intermediary target position can represent the first intermediary target position in a reference frame of the object build frame 440 such that the first intermediary target position is specified as an absolute position. The other moves can be performed in a relative reference frame relative to the intermediary target position from which the part 430 is being moved. Hence, as explained in more detail below, while the other moves may introduce relative move errors that occur due to the accuracy with which the robotic arm 420 can implement a move operation, they do not reintroduce errors that occur due to manufacturing limitations of the part 430, the positioning of the object build frame 440 and the robotic arm's 420 alignment with the object build frame 440. While it could potentially be possible to simply chain these relative move operations and then perform a final correction operation, since each move operation can introduce an error, this could lead to the overall error being too large to correct in-place. Hence, in some examples, relative movement and correction are performed iteratively wherein the relative move operations are each to an intermediary target position and a correction is applied between the relative move operations when the part 430 is in an approximation of the intermediary target position.

In step 305, the method 300 comprises having the robotic arm 420 obtain the part 430 from a home position for the part 430. The home position for the part 430 comprises an initial starting position of the part 430. This can be a position where the part 430 is stored. However, in other examples the part 430 may be moved to the initial starting position to ensure the initial starting position is suitable to enable the robotic arm 420 to obtain/pick up or otherwise collect the part 430.

In step 310, the method comprises determining a move operation that will move the part 430 to a first intermediary target position wherein the first intermediary target position is a position away from the build frame or build assembly of the object. This step can be performed by the computing device. The first intermediary target position is equivalent to the second target position 450 mentioned above. As with the second target position 450 above, the first intermediary target position is in free space away from the object/object build frame 440/object assembly. This ensures any corrections in the position of the part 430 performed in the first intermediary target position do not result in any collisions between the part 430 and the object build frame 440, object and/or other parts of the object. In some examples, where the object is an aircraft then the first intermediary target position may be 100mm from the origin of the coordinate system that defines the aircraft build frame. The origin of the coordinate system that defines the aircraft build frame can comprise a nose of the aircraft. The move operation comprises an operation that moves the part 430 to the first intermediary position. The move operation specifies the first intermediary position as an absolute position e.g. as a position in the reference frame of the object build frame 440. Hence, the first intermediary position is specified relative to the object build frame 440. In step 310, the part 430 is also moved by the robotic arm 420 according to the determined move operation. This results in the part 430 being positioned approximately in the first intermediary target position to within an error wherein the error can be due to any errors in the positioning/sizing of the part 430 and object build frame 440 and errors due to how the robotic arm 420 is mapped to the object build frame 440, for example through floor grid 470.

In step 315, the robotic arm 420 is used to apply a metrology correction to the part 430. As mentioned above, applying a metrology correction can involve obtaining an actual position of the part 430, determining a correction operation to move the part 430 from the actual position to the relevant target position, here the first intermediary target position, and using the robotic arm 420 to move the part 430 according to the correction operation. This corrects for any errors in the manufacture of the part 430, the positioning of the object build frame 440 and the mapping of the robotic arm 420 onto the object build frame 440. Hence, performing this metrology correction can reduce the error from around 10mm to around 0.25mm or 0.5mm.

In steps 320 and 325, the method further comprises performing relative move operations to move the part 430 to a second intermediary target position. This second intermediary target position can also be referred to as a third target position. As above, performing a relative move operation can comprise determining a relative move operation then using a robotic arm 420 to move the part 430 according to the relative move operation. While step 320 and 325 show two relative move operations being performed as part 430 of one iteration, the skilled person would understand that more or fewer relative move operations can be performed as part of a single iteration. For example, only one relative move operation may be performed as part of each iteration.

The number of relative move operation depends upon the difficulty and complexity of getting the part 430 into position. The relative move operations are determined in a reference frame of a current position of the part 430 e.g. a local reference frame or a relative position. When a single relative move operation is used then the relative move is determined relative to the current intermediary target position and moves the part 430 from the current intermediary target position to the next intermediary target position. For example the relative move operation can be relative to the first intermediary target position and move the part 430 from the first intermediary target position to the second intermediary position. In some examples, when multiple relative move operations are used, the starting position for each relative move is the ending position of the previous relative move. The first relative move is thus determined in a reference frame of the current (e.g. first) intermediary position. However, other relative moves are determined in reference frame of an ending position of the previous relative move. However, in other examples all the relative move operations in an iteration are determined based on the current intermediary target position e.g. the first intermediary target position. As the relative move operations are based on a current position of the part 430 and are not specified in the absolute position of the aircraft build frame any errors in the manufacturing of the part 430, the positioning of the object build frame 440 and/or the mapping of the robotic arm 420 to the object build frame 440 remain corrected. However, the relative move operations may introduce an error based on how accurately the robotic arm 420 can move. In some examples, there may be an error of around 0.25mm for each relative move operation. Therefore if multiple relative move operations are required to correctly position a part 430, it can become necessary to perform further metrology corrections.

In step 330, the method comprises moving from working in a local reference frame e.g. a reference frame of a current position of the part 430 to an absolute reference frame e.g. a reference frame of the object build frame. This enables any metrology corrections to be performed.

At step 335, a (second) metrology correction is applied to the part 430. As above, applying a metrology correction involves obtaining/determining an actual position of the part 430. This actual position can be obtained/determined using a metrology system 410 or other measurement system and can specify the position of the part 430 with respect to the reference frame of the object build frame 440. Once an actual position of the part 430 has been obtained a correction operation can be determined. The correction operation is a move operation that moves the part 430 from the actual position to the second intermediary target position. The correction operation can be a move operation relative to the actual position of the part 430. Hence, the correction operation does not reintroduce any errors in how the robotic arm 420 relates to the object build frame 440. Performing the metrology correction 335 also involves using the robotic arm 420 to move the part 430 in accordance with the correction operation. After performance of the metrology correction, the error in the position of the part 430 can be reduced. For example, any errors in how the robotic arm 420 relates to the object build frame 440 can be reduced and hence the error in the position of the part 430 can be reduced down to around 0.25mm.

As shown in Figure 4, steps 320, 325, 330 and 335 can be performed multiple times via multiple intermediary target positions. In particular, a set of relative move operations 320, 325 can be performed and then a correction operation 335 applied several times until only one or one set of relative move operations are required to move the part 430 to the first target position 460. The number of relative move operations in a set can depend upon the error introduced by the robotic arm 420 during each relative move operation and the maximum error which can be corrected in-place without the part 430 colliding or otherwise interacting with the object build frame 440, the object or other parts of the object. After each relative move operation or set of relative move operations 320, 325 a metrology correction 335 can be applied. This ensures that if the movement required to move the part 430 from the first intermediary target position to the first target position 460 is complex and needs to be split into a large number of relative move operations, it is still possible to perform this movement without the overall correction that needs to be applied becoming so large it can no longer be performed in-place.

In step 340, a final relative move or set of relative moves is used to position the part 430 in approximately the first target position 460. A relative move operation or set of relative move operations is determined which moves the part 430 from a final intermediary target position to the first target position 460. This relative move operation or set of relative move operations is determined relative to the final intermediary target position and is determined in a reference frame of the final intermediary target position. The robotic arm 420 is then used to move the part 430 according to this relative move operation or set of relative move operations.

In step 350, the method comprises switching back to a reference frame with respect to the absolution position e.g. the reference frame of the object build frame 440.

At step 355 a metrology correction is applied. In order to apply this metrology correction, an actual position of the part 430 is obtained wherein the actual position of the part 430 is determined in the reference frame of the object build frame 440. As before, this actual position of the part 430 can be determined using a metrology system 410 or other form of measurement system. The actual position of the part 430 and the first target position 460 are then used to determine a correction operation wherein the correction operation is a move that moves the part 430 from its actual position to the first target position 460. The robotic arm 420 is then used to move the part 430 according to the correction operation. This moves the part 430 to a closer approximation of the first target position 460.

In some examples, after this correction 355, the part 430 is simply affixed or otherwise positioned with respect to the object build frame 440. However, in other examples a metrology verification step 360 can be used. In these examples another actual position of the part 430 is determined. This can then be compared to the first target position 460 as discussed above with respect to step 215 of Figure 3. As discussed with respect to Figure 3, if the actual position is within a threshold distance of the first target position 460, then the part 430 can be affixed or otherwise positioned with respect to the object build frame 440. Else, if the actual position is not within a threshold distance of the first target position 460, then as discussed with respect to steps 230 to 240 of Figure 3, a further correction operation can be determined and the part 430 can be moved, by the robotic arm 420, in accordance with this correction operation to reduce the error in the position of the part 430. This process can be repeated until the actual position of the part 430 is within a threshold distance of the first target position 460 at which point the part 430 can be affixed or otherwise positioned with respect to the object build frame 440.

Once the part 430 has been fixed or otherwise positioned with respect to the object build frame 440, then the process can be considered complete as shown in step 365. The robotic arm 420 can then be disconnected or moved away from the part 430, leaving the part 430 in-place with respect to the object build frame 440 as necessary.

In the methods 100, 200 and 300 discussed above, the actual position of the part 430 is determined. As discussed above, the actual position of the part 430 can be determined using a metrology system 410. The metrology system 410 can comprise an imaging device that determines the actual position of the part 430 with respect to the object build frame 440. The imaging system may comprise a camera or a laser tracking system. The zero point or origin of the coordinate system can comprise a particular part/section of the object build frame 440. For example, when the object is an aircraft the zero point or origin or the coordinate system can comprise a nose of the aircraft. The use of a metrology system 410 along with the robotic arm 420 can reduce errors in positioning components as the metrology system 410 can determine a position of the part 430 with respect to the object build frame 440 and hence the absolute position of the part 430 more accurately than the robotic arm 420.

The robotic arm 420 may determine its position relative to a floor grid, such as floor grid 470 shown in Figure 1. In some examples the floor grid 470 can comprise a flexible floor wherein the flexible floor is divided into cells that provide the unit cells for a coordinate system that enables the robotic arm 420 to navigate. The robotic arm determines its position relative to the floor grid 470. The robotic arm 420 can use the position of the object build frame 440 with respect to floor grid 470 to map the actual locations received from the metrology system 410 onto the frame of the floor grid 470. This enables the robotic arm 420 to perform any necessary moves and corrections based on information received from the metrology system 410.

The above methods increase the feasibility of using a robotic arm for positioning parts of an object, particularly when the object is a complex object such as an aircraft. This is because the methods reduce the size of the correction that needs to be performed in-place and hence increases the feasibility of being able to perform that correction without having a part being positioned collide with other parts of the object. This is achieved by correcting for an initial error in free space. However, the above methods can also have other advantages. For example, in some computer-aided design and computer-aided manufacturing environments an object can be designed offline. However, when the object comes to be built there can be errors in the parts and positioning of the object build frame or any grids used for alignment that prevent the design being used for manufacture without significant amendments. The above methods can correct for these errors using the initial correction operation that is performed in free space. The later moves are then performed relative to a current position of the part meaning these errors can remain corrected for and the design can be used in a real-world space even if that space has differences from the design space used in creating the initial design.

In some examples, the object being built is designed by a computer aided manufacturing tool. The method comprises receiving information about the object to be built from the computing aided manufacturing tool. This information can comprise the second target position 450 and any subsequent relative move operations which can be specified with respect to the second target position 450 or any subsequent intermediary target positions. This enables the user/operator to design the object offline since correcting a position of the part 430 in the second target position 450 will mean any errors in how the robotic arm 420 relates to the reference frame of the object build frame 440 remain corrected for after the initial correction operation is applied.

In some examples, the information can also include nominal positions for the object build frame 440 and the second target position 450. The method can comprise comparing the nominal position for the object build frame 440 to an actual position for the object build frame 440 wherein the actual position for the object build frame 440 can be determined using a metrology system 410 or other suitable positioning system 410. The nominal position for the second target position 450 is then adjusted based on the actual position of the object build frame 440 so the relationship between the object build frame 440 and the second target position 450 is the same for the adjusted positions and the nominal positions. In other words, the nominal position for the second target position 450 is adjusted based on the actual position of the object build frame 440 such that the adjusted second target position 450 is positioned with respect to the actual position of the object build frame 440 in the same way the nominal position of the second target position 450 is positioned with respect to the nominal position of the object build frame 440.

As discussed above, in some examples, a part 430 may be moved to a first target position 460, which represents a position at which the part 430 should be positioned with respect to the object build frame 440, via several intermediary target positions including a first intermediary target position otherwise known as a second target position 450. In such examples, a user or operator may specify a path for the part 430 to take using a computer aided manufacturing tool. This path comprises one or more relative move operations from the first intermediary target position via one or more subsequent intermediary target positions to the first target position 460. The user/operator defines/provides a path of relative move operations that enables the part 430 to move into the first target position 460 without colliding with the object build frame 440 or any other objects. In some examples, this may involve a zig-zag path to avoid colliding with the object build frame 440. The user/operator may specify the first intermediary target position (e.g. second target position 450) in the reference frame of the object build frame 440. The user/operator may then specify the first target position 460 and the other intermediary target positions based on how the part 430 should move from the first intermediary target position (e.g. second target position 450) to the first target position 460 so that these target positions are specified with respect to the first intermediary target position or subsequent intermediary target positions.

When the object comes to be built there may be inaccuracies in any positions specified in the reference frame of the object build frame 440 due to issues with alignment of the object build frame 460 with the floor grid 470 and/or inaccuracies due to manufacturing tolerances of the part 430 and the object build frame 460 etc. In addition, there may be inaccuracies due to errors in how the floor grid 470 is installed. The first intermediary target position (or second target position 450) is specified with respect to the object build frame 460. This means the move operation to move the part 430 to the first intermediary target position may be subject to these errors. However, as the first intermediary target position is spatially separated from the object build frame 440, a correction operation can be applied to a position of the part 430 without the part 430 colliding with the object build frame 440. All subsequent move operations are performed relative to another position e.g. the first intermediary target position or another intermediary target position so are relative move operations not in the reference frame of the object build frame 440. This ensures that any inaccuracies in how the robotic arm 420 and the reference frame of the object build frame 440 relate remain corrected for as these move operations are performed. This enables a user/operator to design an object offline and have the above systems/methods correct for any of the inaccuracies in the reference frame of the object build frame 440 without the user/operator having to redesign the path the part 430 should move while the part 430 is being positioned.

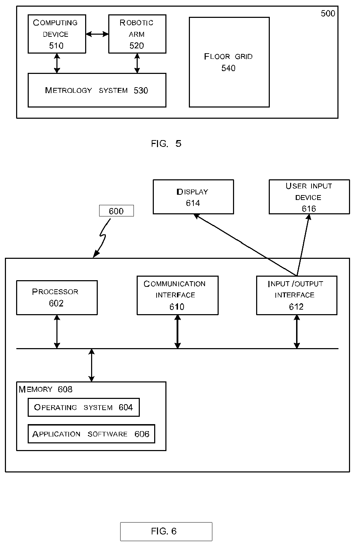

The methods defined above can be implemented by a guided robotic system 500 such as that shown in Figure 5. The guided robotic system 500 comprises a computing device 510, such as the computing device or computer-based device described with respect to Figure 6. The guided robotic system 500 also comprises a robotic arm 520 that is controlled by computing device 510. The computing device 510 can be used to perform the calculations and determining steps of the above method 100, 200, 300. The computing device 510 can also be used to control the robotic arm 520 to perform the move operations of the above methods 100, 200, 300. In some examples, the guided robotic system 500 can also comprise a metrology system 530 which can be used to monitor/determine a position of a part held by the robotic arm 520 and provide this to the computing device 510. The metrology system 530 can be the metrology systems described above. In some examples, a floor grid 540 can also form part of the guided robotic system 500 wherein the floor grid 540 can be floor grid 470 described above. The robotic arm 520 can use the floor grid 540 to determine its position. The guided robotic system 500 can operate on instructions generated by a computer aided manufacturing tool. As discussed above, the instructions can comprise nominal positions for the object build frame 440, the second target position 450. As described above, the guided robotic system 500 can adjust these nominal positions based on an actual position of the object build frame 440 as determined by a metrology system 410.

The above methods 100, 200, 300 may be implemented by a computing device such as the computing device or computer-based device described with respect to Figure 6 below. The computing device may implement the determining and calculating steps and may control a robotic arm to perform the move steps. While the computing device may form part of a guided robotic system 500, in other examples the computing device may be separate from the guided robotic system 500 and may control a separate robotic arm.

The above methods 100, 200, 300 be performed by software in machine readable form on a tangible storage medium e.g. in the form of a computer program comprising computer program code means adapted to perform all the steps of any of the methods described herein when the program is run on a computer and where the computer program may be embodied on a computer readable medium. When the program is run on a computer it may cause the computer to implement the determining and calculating steps and may also cause the computer to control a robotic arm to perform the move steps. Examples of tangible (or non-transitory) storage media include disks, thumb drives, memory cards etc and do not include propagated signals. The software can be suitable for execution on a parallel processor or a serial processor such that the method steps may be carried out in any suitable order, or simultaneously.

Figure 6 illustrates various components of an exemplary computing-based device 600 which may be implemented as any form of a computing and/or electronic device, and in which embodiments of the present application may be implemented as described above.

Computing-based device 600 comprises one or more processors 602 which may be microprocessors, controllers or any other suitable type of processors for processing computer executable instructions to control the operation of the device in order to perform the determining and calculating steps of the above methods and control the robotic arm. In some examples, where a system on a chip architecture is used, the processors 602 may include one or more fixed function blocks (also referred to as accelerators) which implement a part of the method in hardware (rather than software or firmware). Platform software comprising an operating system 604 or any other suitable platform software may be provided at the computing-based device to enable application software 606 to be executed on the device.

The computer executable instructions may be provided using any computer-readable media that is accessible by computing based device 600. Computer-readable media may include, for example, computer storage media such as memory 608 and communications media. Computer storage media, such as memory 608, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 608) is shown within the computing-based device 600 it will be appreciated that the storage may be distributed or located remotely and accessed via a network or other communication link (e.g. using communication interface 610).

The computing-based device 600 also comprises an input/output interface 612 arranged to output display information to a display device 616 which may be separate from or integral to the computing-based device 600. The display information may provide a graphical user interface. The input/output interface 612 is also arranged to receive and process input from one or more devices, such as a user input device 616 (e.g. a mouse or a keyboard). In an embodiment the display 614 may also act as the user input device 616 if it is a touch sensitive display device. The input/output interface 612 may also output data to devices other than the display device, e.g. a locally connected printing device (not shown in Figure 6).

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

In summary, in some examples, when using guided robotics, metrology systems are used to correct for errors inherent in a robotic system by measuring current position and relating this to a target position to apply a corrective move. This process is often referred to as move, measure correct (MMC), whereby a correction is requested and it is an iterative communication and correction process between the robot and the metrology. Systems are using this principle to prove its feasibility for component positioning in lieu of more traditional manufacturing jigs. An important element towards this goal is providing additional flexibility in the robot system, which increases the errors between measured and target position. These errors depend on circumstance but are typically between 2 and 8mm. Values of this magnitude cause issues in component positioning due to the access around components in an aircraft build. With a traditional MMC method this 2-8mm correction would be present every time a correction was requested, meaning the design of aircraft would need to allow for this additional gap, potentially compromising the design and ultimately making the concept unfeasible. In some examples, the present applications defines a process to perform the first MMC correction in clear space and then relates each of the subsequent MMC actions to the previous. This means that the large 2 to 8mm error is only corrected for once and the system then checks the alignment between measured and target positions at strategic locations, such that robot is corrected as it begins to deviate from the required path rather than only at the end. Using this method means that robot can position parts in much smaller 'corridors' than previously thought able, since 'chained' corrections give errors typically <1mm. This type of 'chained' corrections has also been shown to reduce the overall number of corrections required, since MMC is an iterative process, meaning cycle times can be reduced. It also allows for greater variance between a nominal 'offline' programmes written in a CADCAM (computer aided design and computer aided manufacturing) environment for a perfect world where all components perfectly made and positioned to the actual world allowing for variances due to tolerances, alignments and other external factors. This significantly reduces the 'online' at-machine time allowing for greater utilisation of production assets. It should be noted that typical automotive robotic processes rely heavily on 'online' activities to correct for the variance between real and perfect worlds. This process could be built on and further improved to account for robotic tasks requiring high path accuracies e.g. sealant application, welding or machining.

Any range or device value given herein may be extended or altered without losing the effect sought, as will be apparent to the skilled person. Any reference to 'an' item refers to one or more of those items. The term 'comprising' is used herein to mean including the method blocks or elements identified, but that such blocks or elements do not comprise an exclusive list and a method or apparatus may contain additional blocks or elements.

It will be understood that the benefits and advantages described above may relate to one embodiment or may relate to several embodiments. The embodiments are not limited to those that solve any or all of the stated problems or those that have any or all of the stated benefits and advantages.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A method (100; 300) of using a robotic arm (420) to position a part (430) of an object at a first target position (460) with respect to an object build frame (440), the method comprising:
obtaining (110; 305), by the robotic arm (420), the part (430);
determining (120; 310) a move operation to apply to the part (430) wherein the move operation moves the part to a second target position (450) wherein the second target position (450) is spatially separated from the object build frame (440);
moving (130; 310), by the robotic arm (420), the part (430) according to the move operation;
obtaining (140; 315) an actual position of the part (430);
determining (150; 315) a correction operation to apply to the part (430) wherein the correction operation moves the part (430) from the actual position to the second target position (450);
moving (160; 315), by the robotic arm (420), the part (430) according to the correction operation;
determining (170; 340) a relative move operation to apply to the part (430) wherein the relative move operation moves the part (430) from the second target position (450) to the first target position (460); and
moving (180; 340), by the robotic arm (420), the part (430) according to the relative move operation.

2. The method of claim 1 wherein:
the relative move operation is specified relative to the second target position (450).

3. The method of claim 1 or claim 2 wherein determining the relative move operation to apply to the part (430) and moving the part (430) according to the relative move operation comprises determining the relative move operation via a third target position and moving the part via the third target position by:
determining the third target position;
determining (320, 325) a first relative move operation to apply to the part (430) wherein the first relative move operation moves the part from the second target position (450) to the third target position;
moving (320, 325), by the robotic arm (420), the part (430) according to the first relative move operation;
determining (335) a second actual position of the part (430);
determining (335) a second correction operation to apply to the part (430) wherein the second correction operation moves the part from the second actual position to the third target position;
moving (335), by the robotic arm (420), the part according to the second correction operation;
determining (340) a second relative move operation to apply to the part wherein the second relative move operation moves the part (430) from the third target position to the first target position (460); and
moving (340), by the robotic arm (420), the part (430) according to the second relative move operation.

4. The method of any previous claim wherein the second target position (450) being spatially separated from the object build frame (440) comprises the second target position (450) being separated from the object build frame (440) such that when the correction operation is applied to the part, the part (430) does not come into contact with the object build frame (440).

5. The method of any previous claim further comprising:
obtaining (210; 355) a third actual position of the part (430) wherein the third actual position of the part (430) is specified relative to the object build frame (440);
determining (230; 355) a third correction operation to apply to the part (430) wherein the third correction operation moves the part (430) from the third actual position to the first target position (460);
moving (240; 355), by the robotic arm (420), the part (430) according to the third correction operation.

6. The method of any previous claim further comprising:
obtaining (210) a fourth actual position of the part (430) wherein the fourth actual position of the part is specified relative to the object build frame (440);
comparing (215, 220) the fourth actual position of the part (430) to the first target position (460); and
in response to determining the fourth actual position is within a threshold of the first target position, affixing (225) the part (430) to the object build frame (440); or
in response to determining the fourth actual position is not within the threshold of the first target position:
determining (230) a fourth correction operation to apply to the part (430) wherein the fourth correction operation moves the part (430) from the fourth actual position to the first target position (460);
moving (240), by the robotic arm (420), the part (430) according to the fourth correction operation.

7. The method of any previous claim wherein the actual position of the part (430) is obtained from a metrology system (410) wherein obtaining the actual position of the part from the metrology system (410) comprises:
using an imaging device to determine the actual position of the part with respect to the object build frame (440) and wherein the imaging device comprises a camera or a laser tracking system.

8. The method of any previous claim wherein:
the part (430) comprises a part of an aircraft;
the object comprises an aircraft; and
the object build frame (440) comprises an aircraft build frame.

9. The method of any previous claim further comprising:
receiving from a computer aided manufacturing tool the second target position (450) specified with respect to the object build frame (440); and
wherein determining (170; 340) the relative move operation to apply to the part (430) comprises receiving from the computer aided manufacturing tool the relative move operation specified with respect to the second target position (450).

10. The method of claim 9 wherein the relative move operation is a relative move operation via a third target position and determining (170; 340) the relative move operation to apply to the part (430) and moving (180; 340) the part (430) according to the relative move operation comprises:
receiving from the computer aided manufacturing tool a first relative move operation wherein the first relative move operation moves the part from the second target position (450) to the third target position;
moving (320, 325), by the robotic arm (420), the part (430) according to the first relative move operation;
determining (335) a second actual position of the part (430);
determining (335) a second correction operation to apply to the part (430) wherein the second correction operation moves the part from the second actual position to the third target position;
moving (335), by the robotic arm (420), the part according to the second correction operation;
receiving from the computer aided manufacturing tool a second relative move operation to apply to the part (430) wherein the second relative move operation moves the part (430) from the third target position to the first target position (460); and
moving (340), by the robotic arm (420), the part (430) according to the second relative move operation.

11. A computing device (600) for controlling a robotic arm (420) to position a part (430) of an object at a first target position (460) with respect to an object build frame (440), the computing device comprising:
a processor (602); and
a memory (608) storing instructions (606) that when executed by the processor (602) cause the processor (602) to:
cause the robotic arm (420) to obtain (110; 305) the part (430);
determine (120; 310) a move operation to apply to the part (430) wherein the move operation moves the part (430) to a second target position (450) wherein the second target position (450) is spatially separated from the object build frame (440);
cause the robotic arm (420) to move (130; 310) the part (430) according to the move operation;
obtain (140; 315) an actual position of the part (430);
determine (150; 315) a correction operation to apply to the part (430) wherein the correction operation moves the part (430) from the actual position to the second target position (450);
cause the robotic arm (420) to move (160; 315) the part (430) according to the correction operation;
determine (170; 340) a relative move operation to apply to the part (430) wherein the relative move operation moves the part (430) from the second target position (450) to the first target position (460); and
cause the robotic arm (420) to move (180; 340) the part (430) according to the relative move operation.

12. A guided robotic system (500) for positioning a part (430) of an object at a first target position (460) with respect to an object build frame (440), the guided robotic system (500) comprising:
the computing device (600) of claim 11; and
a robotic arm (420) configured to, under control of the computing device:
obtain (110) the part;
move (130) the part according to the move operation;
move (160) the part according to the correction operation; and
move (170) the part according to the relative move operation.

13. The guided robotic system (500) of claim 12 further comprising:
a metrology system (410) configured to:
determine the actual position of the part using an imaging system wherein the imaging system comprises a camera or a laser tracking system; and
provide the actual position of the part to the computing device.

14. The guided robotic system (500) of claim 12 or claim 13 further comprising:
a communications interface (610) configured to receive the instructions (606) from a computer aided manufacturing tool running on a remote computing device.

15. A non-transient computer-readable storage medium comprising instructions that when executed by a processor cause the processor to perform a method for controlling a robotic arm (420) to position a part (430) of an object at a first target position (460) with respect to an object build frame (440), the method comprising:
causing the robotic arm (420) to obtain (110; 305) the part (430);
determining (120; 310) a move operation to apply to the part (430) wherein the move operation moves the part (430) to a second target position (450) wherein the second target position (450) is spatially separated from the object build frame (440);
causing the robotic arm (420) to move (130; 310) the part (430) according to the move operation;
obtaining (140; 315) an actual position of the part (430);
determining (150; 315) a correction operation to apply to the part (430) wherein the correction operation moves the part (430) from the actual position to the second target position (450);
causing the robotic arm (420) to move (160; 315) the part (430) according to the correction operation;
determining (170; 340) a relative move operation to apply to the part (430) wherein the relative move operation moves the part (430) from the second target position (450) to the first target position (460); and
causing the robotic arm (420) to move (180; 340) the part (430) according to the relative move operation.
